# EUROPEAN PATENT APPLICATION

(11) **EP 4 734 467 A1**
(43) Date of publication of application: **29.04.2026**
(21) Application number: 25203691.8
(22) Date of filing: 22.09.2025
(51) Int. Cl.: H04L 41/0893, H04L 41/0894, H04L 41/0895, H04L 41/122, H04L 41/40, H04L 43/08, G06F 9/54, G06N 20/00, G06F 9/50, H04L 41/12

(54) **AN APPARATUS, METHOD, AND COMPUTER-READABLE MEDIUM FOR CONFIGURING A PLURALITY OF MICROSERVICES IN A NETWORKED SYSTEM**

(30) Priority: 25.10.2024 US 202418926425
(71) Applicant: INTEL Corporation, Santa Clara, CA 95054 (US)
(72) Inventor: CARRANZA, Marcos E., Portland, 97229 (US); GUIM BERNAT, Francesc, 08036 Barcelona (ES); POORNACHANDRAN, Rajesh, Portland, 97229 (US); BROWNE, John J., Limerick, V94 C44N (IE); PALERMO, Stephen T., Chandler, 85226 (US)
(74) Representative: 2SPL Patentanwälte PartG mbB

(57) **Abstract**

An apparatus, method, and computer-readable medium for configuring of microservices in a networked system. The method comprising monitoring one or more metrics of the networked system, determining a topology of the networked system based on the one or more metrics, and configuring of the plurality of microservices based on the topology.

## Description

### Background

In the evolution of software architecture, developers have widely transitioned from monolithic structures-an application built as a single, unified unit-to microservices. Microservices focus on specific functionalities, provide simple APIs, and allow individual services to evolve independently. This shift has brought benefits advantages in scalability, clear ownership, and ease of maintenance compared to traditional monoliths. However, this shift has not been without challenges. Major companies have reported significant difficulties managing an extensive network of microservices. Increased complexity, high communication overhead, duplicated resources, and security vulnerabilities have prompted these organizations to reconsider microservices as their sole architectural choice. In some cases, companies have even transitioned applications back to a monolithic architecture and seen large resource reductions, particularly in network latency.

Given that microservices and monoliths are beneficial for certain applications and situations, an improved apparatus, method, and computer-readable medium that can manage the tradeoffs and benefits of both architectures may be desired.

### Brief Description of the Figures

Some examples of apparatuses and/or methods will be described in the following by way of example only and with reference to the accompanying figures, in which:
**Fig.** 1 shows a flowchart of a method for configuring a plurality of microservices in a networked system;
**Fig. 2** shows a simplified flowchart of an example implementation for configuring a plurality of microservices in a networked system;
**Fig. 3** shows a model use flow for the example application of Fig. 2;
**Fig. 4** shows a flowchart of a training flow for a machine learning model;
**Fig. 5** shows a block diagram of an example of an apparatus (or device) for configuring a plurality of microservices in a networked system; and
**Fig. 6** illustrates a computing device for configuring a plurality of microservices in a networked system.

### Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures, same or similar reference numerals refer to same or similar elements and/or features, which may be identical or implemented in a modified form while providing the same or a similar function. The thickness of lines, layers, and/or areas in the figures may also be exaggerated for clarification.

Accordingly, while further examples are capable of various modifications and alternative forms, some particular examples thereof are shown in the figures and will subsequently be described in detail. However, this detailed description does not limit further examples to the particular forms described. Further examples may cover all modifications, equivalents, and alternatives falling within the scope of the disclosure. Like numbers refer to like or similar elements throughout the description of the figures, which may be implemented identically or in modified form when compared to one another while providing for the same or a similar functionality.

When two elements A and B are combined using an "or," this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a," "an," and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include," "including," "comprise," and/or "comprising," when used, describe the presence of the specified features, integers, steps, operations, processes, elements, components, and/or a group thereof, but do not exclude the presence or addition of one or more other features, integers, steps, operations, processes, elements, components and/or a group thereof.

Unless otherwise defined, all terms (including technical and scientific terms) are used herein in their ordinary meaning of the art to which the examples belong.

Specific details are set forth in the following description, but examples of the technologies described herein may be practiced without these specific details. Well-known circuits, structures, and techniques have not been shown in detail to avoid obscuring an understanding of this description. "An example/example," "various examples/examples," "some examples/examples," and the like may include features, structures, or characteristics, but not every example necessarily includes the particular features, structures, or characteristics.

Some examples may have some, all, or none of the features described for other examples. "First," "second," "third," and the like describe a common element and indicate different instances of like elements being referred to. Such adjectives do not imply that the described element item must be in a given sequence, either temporally or spatially, in ranking, or in any other manner. "Connected" may indicate elements are in direct physical or electrical contact with each other, and "coupled" may indicate elements cooperate or interact with each other, but they may or may not be in direct physical or electrical contact.

As used herein, the terms "operating," "executing," or "running" as they pertain to software or firmware in relation to a system, device, platform, or resource are used interchangeably and can refer to software or firmware stored in one or more computer-readable storage media accessible by the system, device, platform, or resource, even though the instructions contained in the software or firmware are not actively being executed by the system, device, platform, or resource.

The description may use the phrases "in an example/example," "in examples/examples," "in some examples/examples," and/or "in various examples/examples," each of which may refer to one or more of the same or different examples. Furthermore, the terms "comprising," "including," "having," and the like, as used with respect to examples of the present disclosure, are synonymous.

It should be noted that the example schemes disclosed herein are applicable for/with any operating system and a reference to a specific operating system in this disclosure is merely an example, not a limitation.

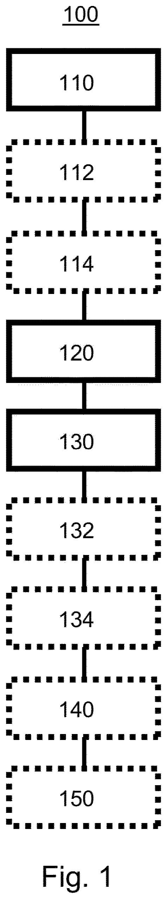

**Fig. 1** shows a flowchart of a method 100 for configuring a plurality of microservices in a networked system. The method may comprise monitoring 110 one or more metrics of the networked system, determining 120 a topology of the networked system based on the one or more metrics, and configuring 130 the plurality of microservices based on the topology.

In the past decades, a monolithic architectural style has been the default choice for companies when developing production systems. An application created as a monolith is built as a unified unit. It typically includes the user interface, business logic, and data access layers, all within the same program. More recently, a microservices architectural style was introduced, and many companies have switched to that approach. An application created with microservices is built as a collection of small, independent services communicating with each other over well-defined interfaces, such as APIs. Each microservice focuses on a specific business capability and can be developed, deployed, and scaled independently of the others.

Compared to monoliths, microservices provide benefits in scalability, flexibility, deployment times, maintenance, and other factors. However, the microservices approach also has drawbacks in network latency and communication overhead, increased resource requirements, and security concerns. Therefore, a dynamic system that can adaptively switch between microservices and monolithic deployments based on real-time system monitoring and quality of service requirements has an advantage.

The choice between microservices and a monolithic architecture depends on various factors, including the size and scope of the project, organizational capacity for managing complex, distributed systems, and specific performance and scalability requirements. For startups and smaller applications, starting with a monolith and then breaking it down into microservices as needed can be a pragmatic approach. For larger, more complex applications with clear requirements for scalability and resilience, adopting a microservices architecture from the start might be beneficial.

A networked system may be an interconnected collection of computing devices, servers, nodes, or systems communicating over a network. The arrangement of this system may be called a network topology, which describes how the plurality of microservices, hardware resources, communication links, and other system components are organized and interconnected. The topology defines the structural layout and deployment of the microservices within the system, determining how they are executed (e.g. as plugins or standalone services), how they communicate with each other (e.g. via intra-process communication or network requests), and how they interact with shared infrastructure resources. Altering the topology is instrumental in achieving the desired operational objectives by optimizing performance, scalability, and resource utilization within the networked system.

Microservices may be multiple independent modules, components, software, or functional units designed to perform specific tasks within an application or networked system. Each microservice may focus on a particular business capability and can be developed, deployed, and scaled independently of the others. Examples of microservices include user interface components, payment processing modules, authentication services, inventory management systems, and notification handlers.

Microservices may scale independently, allowing the allocation of more resources to the components that need them most without scaling the entire application. Different microservices may use different programming languages, databases, or other tools, allowing the use of the best tool for each specific job. Due to their smaller size and independence, microservices may be developed, tested, and deployed faster than a monolithic application. This may accelerate the time to market for new features. If one microservice fails, it doesn't necessarily bring down the entire system. This isolated failure mode may increase the overall resilience of an application. Smaller, well-defined microservices may be easier for developers to understand and for teams to maintain compared to a large, complex monolithic codebase. Microservices may lend themselves well to continuous integration and continuous delivery (CI/CD) processes, making it easier to automate testing and deployment.

Microservices offer many benefits over monolithic applications; however, monoliths are not a problem in certain software situations, particularly where infrastructure costs are an issue. Some drawbacks of using microservices include problems with network latency, communication overhead, increased resource requirements, and security concerns.

Communication between services over a network introduces latency. Optimizing this communication to avoid significant performance hits requires careful design and implementation. Ensuring data consistency across services and managing distributed data is sometimes challenging, especially in systems that require strong transactional integrity. Running multiple services-each, potentially, with its own stack and dependencies-may lead to increased infrastructure costs compared to a monolithic architecture. Monitoring, logging, and troubleshooting a distributed system may require more sophisticated tools and expertise from the development and operations teams. Furthermore, each microservice exposes its own set of endpoints, potentially increasing the attack surface for malicious activities. Implementing consistent security policies across diverse services and technology stacks may be challenging.

Embodiments herein disclose a mechanism for configuring a plurality of microservices in a networked system that can manage both models' tradeoffs depending on the application type, available infrastructure/topology, and resource utilization. Depending on where the services are deployed, their resource utilization, and quality of service requirements, a set of microservices may work independently (i.e. forming a regular microservices mesh), work together as a monolith, or work as a hybrid model. The system may adapt based on the context. Different types of triggers, such as a networking overload, a performance-related issue, or other problems that the system can learn over time, allow the system to autonomously adapt or morph by identifying the right components to group depending on the quality of service (QoS) requirements. For this, the system uses mechanisms that provide alternatives to communicate between components (e.g. gRPC/REST, direct function call, shared memory, etc.), which are fully abstracted to simplify development.

Embodiments herein focus on reducing networking traffic to make the system more efficient while improving performance (e.g. no latency on calls to other components). Also, on the security side, they may reduce the attack surface by making it impossible for man-in-the-middle attacks when components are aggregated as monoliths. This is particularly important at the edge, in which resources are more limited.

In the context of a networked system, in particular cloud computing, the "edge "refers to distributed computing resources and infrastructure located near the sources of data generation or near end-users. Edge computing brings computation and data storage closer to devices, sensors, or users, reducing latency, conserving bandwidth, and enabling real-time processing and analysis. Processing data at the network's edge rather than in centralized data centers enhances performance for applications requiring immediate responses, such as Internet of Things (IoT) devices, autonomous vehicles, and real-time analytics.

Sometimes, the disclosed embodiments may orchestrate changes from an edge orchestrator, which may be on-premises or in the cloud. The edge orchestrator may be a central authority, as in GitOPS continuous delivery type infrastructure. Once edge nodes are replicated from the edge orchestrator, the edge nodes can serve as a cluster that spans across one or more edge nodes to distribute workloads. The embodiments within this disclosure may operate an edge orchestrator and among edge nodes for infrastructure control and/or application clusters. This takes the best from microservices architectures and monoliths while minimizing the cons. The system may result in less latency and communication overhead and be a very adaptable use of resources for efficiency.

One or more metrics may comprise a network traffic metric and/or a quality of service metric. A network traffic metric may be measurements related to data flow within the network, such as bandwidth usage, packet loss, latency, or throughput. A quality of service metric may indicate the network's performance quality, including availability, error rates, jitter, or response times. A monitoring analytics module may continuously track system metrics such as events, errors, component latency, and overall system behavior to assess performance and identify potential issues.

In some embodiments, each microservice of the plurality of microservices may be configured to selectively operate as a plugin and/or a standalone service. Microservices may be designed to function either as integrated components (plugins) within a host application or independently over a network. A plugin refers to a software module that can be loaded into a host application to extend its functionality without requiring separate deployment. The host application is a software environment or service wrapper that can load plugins and manage their execution within its process space. A standalone service is a microservice that operates independently and communicates with other services over a network using standard protocols. Operating a microservice as a plugin or a standalone service allows the system to optimize performance and resource usage by dynamically choosing the most suitable operation mode for each microservice.

Configuring the plurality of microservices may comprise executing two or more of the plurality of microservices as plugins. Running multiple microservices embedded within a host application or service wrapper may allow for tighter integration and potentially improved performance. A service wrapper is an intermediary software layer (e.g. a hosting application, framework, or container) that encapsulates microservices, providing a unified interface and managing their execution as plugins within the host application's process space. This configuration enhances performance by enabling direct method calls and shared memory access, resulting in faster data exchange and lower latency.

In some embodiments, the plugins communicate with each other via intra-process communication. Intra-process communication refers to the exchange of data between software components within the same operating system process using mechanisms like shared memory or internal messaging systems. Compared to inter-process or network communication, intra-process communication minimizes latency and resource consumption.

In some embodiments, each microservice implements a service interface callable by a service wrapper. A service interface is a defined set of methods and protocols through which a microservice can be invoked or interacted with by a managing application or framework, regardless of its deployment mode. Configuring 130 the plurality of microservices may comprise loading 132 a first microservice as a first plugin into the service wrapper when the first microservice is selectively operating as the plugin and/or calling 134 the first microservice via a network request from the service wrapper when the first microservice is selectively operating as the standalone service. A consistent service interface allows the service wrapper to interact seamlessly with microservices, whether operating as plugins or standalone services. This uniformity simplifies integration and promotes flexibility in deployment strategies, enhancing maintainability and scalability.

In some embodiments, the method 100 further includes receiving 140 a request for the first microservice from a client apparatus and routing the request to the service wrapper. A client apparatus may refer to any computing device or system that initiates a request for services provided by the microservices, such as user devices, servers, or other applications. Routing client requests through the service wrapper centralizes control and management of microservice interactions and enhances security by providing a single point of entry.

In some embodiments, monitoring 110 the one or more metrics of the networked system may further comprise monitoring 112 a plurality of shared hardware infrastructure resources. These may be physical computing resources such as processors, memory, storage devices, and network interfaces utilized by multiple microservices or applications within the system. Monitoring shared hardware infrastructure resources ensures efficient utilization of hardware, prevents bottlenecks, and maintains system performance under varying loads.

In some embodiments, determining 120 the networked system's topology may be based on a machine learning model trained on historical data to predict the system's future state. A machine learning model is a computational model that uses algorithms and statistical techniques to learn patterns from data and make predictions or decisions without being explicitly programmed for specific tasks. This allows the system to anticipate future system states and adjust the network topology proactively, enhancing system robustness and minimizing downtime.

In some embodiments, the method 100 further includes obtaining 150 one or more feedback metrics on the configuration of the plurality of microservices based on the topology and adding the one or more feedback metrics as further historical data for retraining the machine learning model. Feedback metrics are data collected regarding the performance and effectiveness of the current microservice configuration, such as response times, error rates, or resource utilization. By retraining the model with new data, the system may adapt to changing conditions and improve its decision-making over time.

In some embodiments, determining 120 the topology may comprise determining or selecting a subset of the plurality of microservices to operate as plugins. Identifying and grouping particular microservices to operate as plugins may optimize inter-service communication and resource usage. This selective aggregation enhances performance for tightly coupled services and contributes to a more efficient system architecture.

The determination to group these microservices into a subset operating as plugins (e.g. in the same service wrapper) may be based on monitored metrics indicating high inter-service communication frequency and low permissible latency. For instance, the monitoring analytics module may collect data revealing that these services exchange information extensively and require rapid response times to maintain a seamless user experience. Some examples of microservices that can be grouped include user authentication, session management, and user profile services. These are often tightly coupled due to their frequent interactions and shared data dependencies when managing user-related functionalities within the system.

In some embodiments, a group of microservices of the plurality of microservices may be configured to form a microservices package. Every microservice within the microservices package is configured to operate together by way of a port or a socket. A microservice package is a collection of microservices bundled together to function as a cohesive unit, facilitating simplified deployment and management. Ports and sockets are communication endpoints used for inter-process communication, allowing data exchange between microservices within the package. Forming microservice packages allows for streamlined deployment and enhanced communication efficiency among grouped services. Utilizing ports or sockets for communication within the package reduces latency and simplifies network configurations.

In some embodiments, the subset of the plurality of microservices that are determined to operate as plugins may be stopped or paused when operating as standalone services. By stopping, pausing, or holding standalone instances of microservices when they are configured to operate as plugins, the system prevents redundant execution and conserves computational resources. This may also allow services to quickly resume in standalone operation when a new topology is determined. This dynamic management of microservices as plugins and standalone services reduces overhead and improves system efficiency.

In some embodiments, each microservice may be assigned a priority level, and the microservice is configured to modify its execution according to its priority level based on a system policy. Modifying a microservice's execution may comprise pausing the microservice or adjusting a quality metric. A subset of the plurality of microservices support pausing and/or QoS adjustments, and the subset is prioritized based on one or more policies. One or more policies may be set by past machine learning or AI monitoring of one or more hardware resources and/or a human network administrator. Microservices may be assigned different levels of priority within the system. This prioritization determines how resources are allocated to each microservice, especially when competition for limited hardware resources exists. The system may temporarily halt lower-priority microservices to free up resources for higher-priority ones. QoS mechanisms ensure that higher priority microservices receive the necessary resources to meet performance requirements, such as bandwidth, latency, and computational power.

The system may employ AI to monitor hardware resource utilization over time, and based on this monitoring, AI can generate policies that optimize resource allocation by predicting bottlenecks and adjusting priorities accordingly. For example, suppose the AI monitoring detects a GPU overloaded due to multiple competing microservices. In that case, the system may pause less critical microservices or adjust their QoS to free up resources. In applications with 5G microservices, low latency, and high throughput may be crucial. Dynamic prioritization of these microservices may help maintain service quality and ensure that resource limitations do not hinder the most important services for 5G payloads.

Likewise, human administrators may manually set policies based on organizational priorities, service-level agreements (SLAs), or other considerations. This allows for human oversight and intervention in the prioritization process. Furthermore, adjusting microservice operations based on AI insights and human policies may allow the system to scale effectively with changing demands.

In some embodiments, each microservice of the plurality of microservices may be configured to process fifth-generation mobile network (5G) payload data. A microservice may be directed at 5G applications meaning that they may be designed to handle the actual data and control traffic or payloads generated by 5G systems rather than focusing on managing or maintaining the infrastructure of the underlying system or cluster. In other words, the microservices may be responsible for processing, analyzing, or managing the network traffic and data associated with 5G applications. This may include handling user data, processing artificial intelligence (AI) inference results, and managing control signals within the 5G network. In this scenario, the microservices might not be primarily concerned with the operational aspects of the cluster itself, such as resource allocation, hardware configurations, or system maintenance. Infrastructure tasks might include monitoring hardware performance, managing CPU/GPU resources, or adjusting system settings to optimize performance. By focusing on the payload, the microservices can optimize 5G network performance, improve data handling, and enhance user experiences without being burdened by infrastructural overhead. Separating payload processing from infrastructure management allows for more scalable and flexible deployment of microservices, which is particularly important in dynamic 5G environments.

In some embodiments, the method 100 may set a threshold 114 for the one or more metrics based on the determined topology and continuously monitor one or more metrics of the network system. A further topology of the networked system may be determined, and the plurality of microservices may be reconfigured based on the further topology when the threshold is met. A threshold is a predefined value or set of values for specific metrics that, when exceeded, trigger actions such as reconfiguration of the network topology. Setting thresholds may enable the system to respond promptly to significant changes in performance or load.

In some embodiments, monitoring 110 of the one or more metrics may be done continuously, and determining the topology and configuring the plurality of microservices may be done based on the continuous monitoring. Continuous monitoring allows the system to detect and respond to fluctuations in real-time, ensuring that the microservices' configuration remains aligned with current operational demands.

A non-transitory, computer-readable medium may comprise a program code for configuring a plurality of microservices in a networked system that, when the program code is executed on a processor, a computer, or a programmable hardware component, causes the processor, computer, or programmable hardware component to perform the method 100.

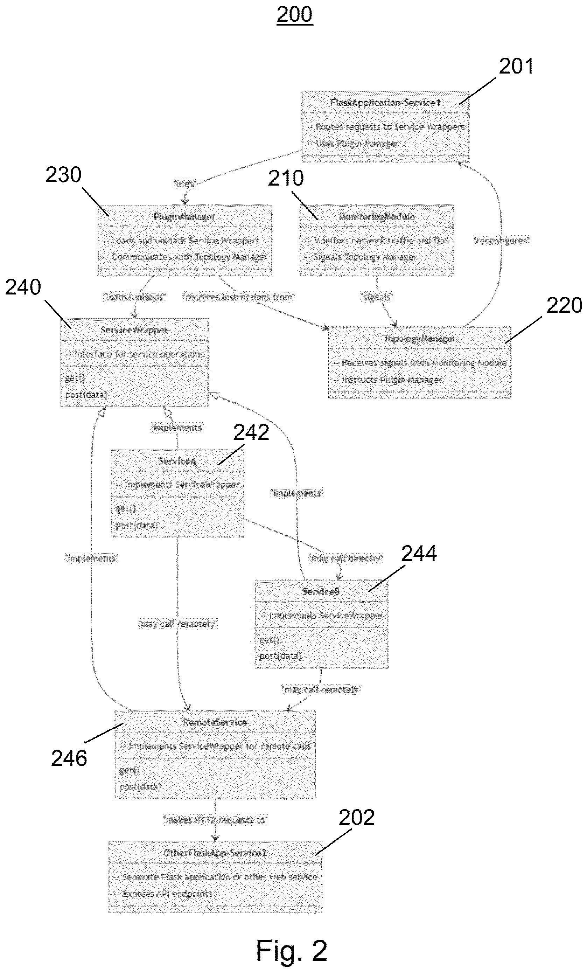

More details and optional aspects of Fig. 1 may be described in connection with examples described below (e.g. Figs. 2 to 6).

**Fig. 2** shows a simplified flowchart 200 of an example implementation for configuring a plurality of microservices in a networked system. The example is implemented using the Python programming language and Flask, a framework for web development written in Python. However, nothing in this disclosure should be construed as limited to a specific language or framework.

The first application 201 (e.g. FlaskApplication Service1) utilizing the mechanisms or embodiments disclosed herein may route requests to one or more service wrappers 240 (e.g. ServiceWrapper) using a plugin manager 230 (e.g. PluginManager). The system may operate a monitoring module 210 (e.g. MonitoringModule) to monitor network traffic and QoS. Based on this, a topology manager 220 (e.g. TopologyManager) is signaled. The topology manager 220, upon receiving a signal from the monitoring module 210, reconfigures the first application 201 and instructs the plugin manager 230 on the system's new topology. The plugin manager 230 receives instructions from the topology manager 220 and loads one or more service wrappers 240 according to the new topology. The first application 201 then reroutes requests to the appropriate service wrappers 240 that then call microservices acting as plugins 242, 244 or remotely 246.

Service wrappers 240 are interfaces for service operations. Microservices 242, 244, 246 (e.g. Service A, Service B, & RemoteService) implement a service wrapper 240. When microservices are implemented together as plugins 242, 246 (e.g. Service A & Service B) they may call each other directly. Microservices operating as plugins 242, 246 may also call standalone instances of microservices 246. Likewise, standalone microservices 246 may call other standalone microservices. And all microservices 242, 244, 246 may make network calls to a second application 202 (e.g. OtherFlaskApp Service2). The second application 202 may be a separate Flask application or web service that exposes API endpoints for interaction.

The embodiments herein disclose an autonomous system that can dynamically adapt, based on network traffic and QoS, between a microservices architecture, a monolithic architecture, or an intermediate hybrid model. To do that, services may be dynamically loaded as plugins within the same process when they need to interact closely. This reduces the network traffic between these services, as they can now communicate directly in-process. The system can still maintain a microservices architecture when services are independent and do not need to communicate frequently. Each microservice may also be refactored to function as a plugin. This means it can be dynamically loaded into a host service, allowing it to run in the same process space and communicate directly with other plugins without network overhead. A plugin manager is introduced to handle these service plugins' dynamic loading and unloading. Depending on the current needs, the plugin manager can load a single service as a microservice or multiple services together as a thicker service. Several new components are required to monitor the system and make decisions, such as reconfigure the services according to context.

The first application 201 may serve as the entry point for all client requests. It uses the plugin manager 230 to interact with the appropriate service wrappers 240, whether local or remote. The first application 201 receives incoming client requests. Based on the current configuration, it uses the plugin manager 230 to route each request to the appropriate service wrapper. The service wrapper 240 processes the request and returns the response. If the wrapper is a local instance, it handles the request directly. If it's a remote proxy, it makes an HTTP call to the external microservice. The first application 201 then sends the response back to the client.

A monitoring module 210 continuously monitors network traffic and QoS metrics. It decides when to trigger the reconfiguration of services (from microservices to a monolithic setup, vice versa, or hybrid models). One or more metrics may be quantitative measurements or indicators related to system performance, such as throughput, latency, resource utilization, or other operational parameters. The monitoring module 210 continues to monitor the system, ready to trigger further reconfigurations if conditions change.

A topology manager 220 may receive signals from the monitoring module and orchestrate the reconfiguration process. It starts and stops services (and also puts them on hold) and manages their deployment/redeployment based on the current optimal topology. A topology may be a network system's structural arrangement, configuration, or layout, including how components are interconnected.

A plugin manager 230 may manage the dynamic loading and unloading of service wrappers as plugins. It instantiates services as local or remote based on the configuration received from the topology manager 220. This could be based on the Python example provided below or use dynamic library loading in the case of C++ (.so in Linux).

Each microservice 242, 244, 246 may have a service wrapper 240 that implements a common service interface (ServiceWrapper). The service wrapper 240 can be instantiated as a local service directly within the Flask application or as a remote service proxy that makes HTTP requests to a standalone microservice.

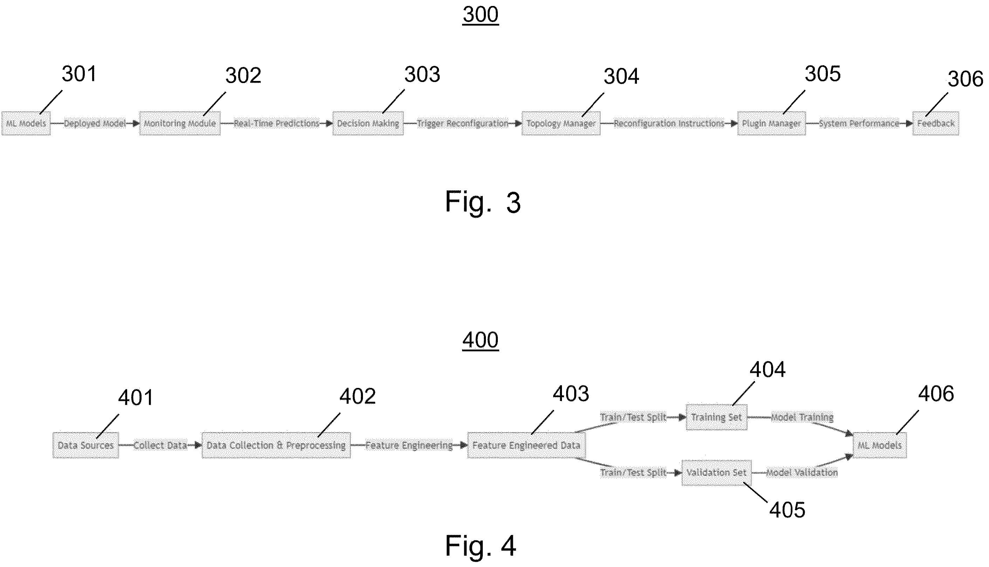

More details and optional aspects of Fig. 2 may be described in connection with examples described above (e.g. Fig. 1) or below (e.g. Figs. 3 to 6).

**Fig. 3** shows a model use flow 300 for the example application of Fig. 2. The system may have a monitoring module, a topology manager, service wrappers, a plugin manager, and applications. Machine learning models 301 may determine how a monitoring module 303 evaluates the metrics of the system. When certain real-time predictions are made on how the system should operate, a decision engine 303 will trigger the topology manager 304 to send instructions to the plugin manager 305 for the reconfiguration of the plurality of microservices. Then, based on system performance, a feedback module 206 will collect information on how the reconfigured topology performed.

The monitoring (and analytics) module continuously collects data on network traffic, response times, resource usage, and other relevant metrics across all microservices. It analyzes this data to determine system performance and identify bottlenecks or inefficiencies. The four golden signals-events, saturation, latency, and throughput-are used.

Events (e.g. errors) describe the number of failed requests. Saturation describes memory usage and central processing unit (CPU) load (e.g. CPU saturation at 100%). Latency (e.g. response time) describes the time needed to process a request. Throughput (e.g. traffic) describes the number of requests processed per minute or second.

Each of these signals is monitored and can be used to detect and predict infrastructure bottlenecks. This type of telemetry is independent of the workload. However, it can also be combined with workload key performance indicators (KPIs) to make predictions to avoid issues like noisy neighbors (e.g. a spike in a cloud neighbor's workload), possibly generating an impact on one tenant's activities to another in environments such as the public cloud. Other metrics, such as Disk I/O Operations or system logs, may also be needed, including error and audit logs. Additionally, power consumption may be important to consider as input as well. The monitoring and analytics module also measures shared hardware infrastructure resources to detect exhaustion. The monitored resources include cache utilization metrics, memory bandwidth metrics, IO bandwidth metrics for disk, storage, accelerators, and hardware accelerator utilization, including GPU.

The monitoring module 302 sends a signal to the topology manager 304 with the recommended service topology changes. This topology also indicates whether the workload (microservice or monolithic app) uses one or more XPUs or completely runs in them (such as the case of IPU ACC providing an additional compute environment for workloads). Executing microservices as plugins reduces inter-process communication overhead and latency, leading to faster response times and more efficient resource utilization.

By utilizing specific metrics like network traffic and quality of service, the system may fine-tune microservices configurations to maintain optimal performance. This ensures that service levels are upheld even under varying network conditions, enhancing the robustness and efficiency of the networked system.

Based on the analysis, the monitoring module decides 303 whether a reconfiguration could improve the system's performance or QoS. If a reconfiguration is needed, the monitoring module determines the optimal service topology (which services should be local and remote). To enable this autonomous system to anticipate and adapt to changing conditions before they impact performance or QoS, machine learning models such as Long Short-Term Memory (LSTM) may be integrated. However, this disclosure is not limited to this model and may be implemented using other machine learning models like Gradient Boosting Machines for Classification. These models may leverage historical and real-time data to predict future system states. Machine learning is discussed in regard to Fig. 4 below.

The topology manager 304 receives the signal and translates it into specific actions for the plugin manager 305 to execute through a services reconfigure mechanism (API). For example, it may instruct the plugin manager to load certain services as local instances or to set up others as remote proxies.

The plugin manager 305 unloads any currently loaded service wrappers that are no longer needed or need to be switched from local to remote (or vice versa). It then loads the new service wrappers as the topology manager directs, instantiating local services or setting up remote service proxies as required.

Each service wrapper implements a common interface (e.g. ServiceWrapper from Fig. 2) and can operate in two modes: as a local instance, directly handling requests within the Flask application, or as a remote proxy, forwarding requests to a standalone microservice instance over the network.

More details and optional aspects of Fig. 3 may be described in connection with examples described above (e.g. Figs. 1 to 2) or below (e.g. Figs. 4 to 6).

**Fig. 4** shows a flowchart 400 of a training flow for a machine learning model. Historical metrics on network traffic, response times, resource usage, and errors are gathered from data sources 401. Then, this data is preprocessed 402 to ensure it is clean and normalized (creating a sliding window to generate input sequences for the LSTM). Following preprocessing, feature engineering is performed 403 to extract and construct relevant features from the data that enhance the model's ability to learn and predict. This may include creating new variables, transforming existing ones, or selecting key attributes that capture important patterns in the data. The LSTM network is trained 404 on historical data, using a validation set 405 to monitor for overfitting and to optimize hyperparameters. Finally, the trained models are integrated 406 into the monitoring module, enabling real-time data processing and timely predictions. The machine learning model may establish thresholds in the monitoring module that, when exceeded, trigger the system's reconfiguration process (potential high-load scenarios or resource bottlenecks). A feedback loop is also required for continuous learning, where the system's post-reconfiguration performance data is used to continuously improve the ML models.

Machine learning generally refers to algorithms and statistical models that computer systems may use to perform a specific task without explicit instructions, instead relying on models and inference. For example, in machine learning, a data transformation may be inferred from an analysis of historical and/or training data instead of a rule-based data transformation. For example, in a popular example of machine learning, the content of images may be analyzed using a machine-learning model or a machine-learning algorithm. In order for the machine-learning model to analyze the content of an image, the machine-learning model may be trained using training images as input and training content information as output. By training the machine-learning model with a large number of training images and/or training sequences (e.g. words or sentences) and associated training content information (e.g. labels or annotations), the machine-learning model "learns" to recognize the content of the images, so the content of images that are not included in the training data can be identified using the machine-learning model. The same principle may be used for other kinds of sensor data, or more generally, data, as well: By training a machine-learning model using training sensor data and a desired output, the machine-learning model "learns" a transformation between the sensor data and the output, which can be used to provide an output based on non-training sensor data provided to the machine-learning model. The provided data (e.g. sensor data, metadata, and/or image data) may be preprocessed to obtain a feature vector used as input to the machine-learning model.

In many cases, machine-learning models may be trained using training input data. The examples specified above use a training method called "supervised learning ."In supervised learning, the machine-learning model is trained using a plurality of training samples, wherein each sample may comprise a plurality of input data values and a plurality of desired output values, i.e. each training sample is associated with a desired output value. By specifying training samples and desired output values, the machine-learning model "learns" which output value to provide based on an input sample similar to the samples provided during the training. Apart from supervised learning, semi-supervised learning may be used. In semi-supervised learning, some training samples lack a corresponding desired output value. Supervised learning may be based on a supervised learning algorithm (e.g. a classification algorithm, a regression algorithm, or a similarity learning algorithm. Classification algorithms may be used when the outputs are restricted to a limited set of values (categorical variables). In other words, the input is classified as one of the limited values. Regression algorithms may be used when the outputs have any numerical value (within a range). Similarity learning algorithms may be similar to classification and regression algorithms but are based on learning from examples using a similarity function that measures how similar or related two objects are. Apart from supervised or semi-supervised learning, unsupervised learning may be used to train the machine-learning model. In unsupervised learning, (only) input data might be supplied, and an unsupervised learning algorithm may be used to find structure in the input data (e.g. by grouping or clustering the input data, finding commonalities in the data). Clustering is the assignment of input data comprising a plurality of input values into subsets (clusters) so that input values within the same cluster are similar according to one or more (predefined) similarity criteria while being dissimilar to input values in other clusters.

Reinforcement learning is a third group of machine-learning algorithms. In other words, reinforcement learning may be used to train the machine-learning model. In reinforcement learning, one or more software actors ("software agents") are trained to act in an environment. Based on the actions taken, a reward is calculated. Reinforcement learning is based on training one or more software agents to choose the actions to increase the cumulative reward. This leads to software agents that become better at the task they are given (as evidenced by increasing rewards).

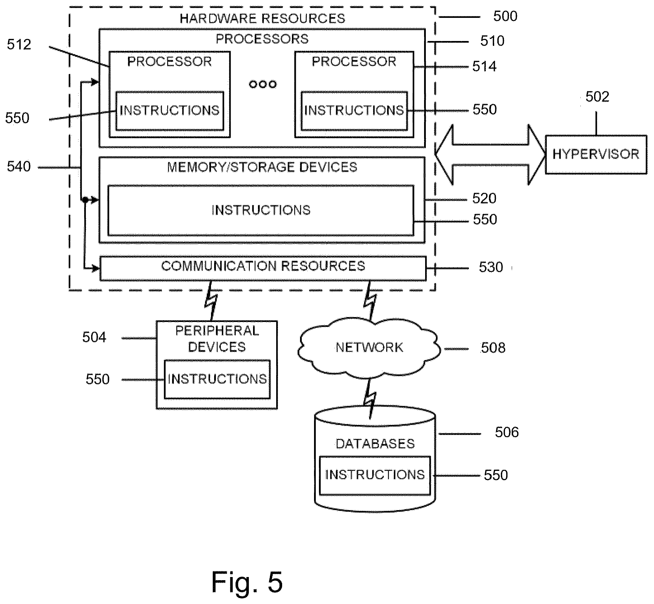

More details and optional aspects of Fig. 4 may be described in connection with examples described above (e.g. Figs. 1 to 3) or below (e.g. Figs. 5 to 6).

**Fig. 5** shows a block diagram of an example of an apparatus (or device) for configuring a plurality of microservices in a networked system in accordance with one or more embodiments disclosed herein. The block diagram illustrates components, according to some example embodiments, able to read instructions from a machine-readable or computer-readable medium (e.g. a non-transitory machine-readable storage medium) and perform any one or more of the methodologies discussed herein. Specifically, Fig. 5 shows a diagrammatic representation of hardware resources 500, including one or more processors (or processor cores) 510, one or more memory/storage devices 520, and one or more communication resources 530, each of which may be communicatively coupled via a bus 540. For embodiments where node virtualization (e.g. NFV) is utilized, a hypervisor 502 may be executed to provide an execution environment for one or more network slices/sub-slices to utilize the hardware resources 500

The processors 510 (e.g. a central processing unit (CPU), a reduced instruction set computing (RISC) processor, a complex instruction set computing (CISC) processor, a graphics processing unit (GPU), a digital signal processor (DSP) such as a baseband processor, an application specific integrated circuit (ASIC), a radio-frequency integrated circuit (RFIC), another processor, or any suitable combination thereof) may include, for example, a processor 512 and a processor 514.

The memory/storage devices 520 may include main memory, disk storage, or any suitable combination thereof. The memory/storage devices 520 may include, but are not limited to, any type of volatile or non-volatile memory such as dynamic random access memory (DRAM), static random-access memory (SRAM), erasable programmable read-only memory (EPROM), electrically erasable programmable read-only memory (EEPROM), Flash memory, solid-state storage, etc.

The communication resources 530 may include interconnection or network interface components or other suitable devices to communicate with one or more peripheral devices 504 or one or more databases 506 via a network 508. For example, the communication resources 530 may include wired communication components (e.g. for coupling via a Universal Serial Bus (USB)), cellular communication components, NFC components, Bluetooth^{®} components (e.g. Bluetooth^{®} Low Energy), Wi-Fi^{®} components, and other communication components.

Instructions 550 may comprise software, a program, an application, an applet, an app, or other executable code for causing at least any of the processors 510 to perform any one or more of the methodologies discussed herein. The instructions 550 may reside, completely or partially, within at least one of the processors 510 (e.g. within the processor's cache memory), the memory/storage devices 520, or any suitable combination thereof. Furthermore, any portion of the instructions 550 may be transferred to the hardware resources 500 from any combination of the peripheral devices 504 or the databases 506. Accordingly, the memory of processors 510, the memory/storage devices 520, the peripheral devices 504, and the databases 506 are examples of computer-readable and machine-readable media.

The components of the apparatus or device are defined as component means, which may correspond to, or be implemented by, the respective structural components of the apparatus. For example, the device of Fig. 5 comprises means for processing, which may correspond to or be implemented by the processing circuitry (e.g. a processor, a computer, or a programmable hardware component), means for communicating, which may correspond to or be implemented by the interface circuitry, and (optional) means for storing information, which may correspond to or be implemented by the storage circuitry (e.g. a non-transitory, computer-readable medium). In the following, the functionality of the device is illustrated with respect to the apparatus. Features described in connection with the apparatus may thus likewise be applied to the corresponding device.

The apparatus may comprise interface circuitry, memory circuitry, machine-readable instructions, and processor circuitry to execute the machine-readable instructions. The apparatus may be part of a system. For example, the processing circuitry may be configured to provide the functionality of the apparatus in conjunction with the interface circuitry. For example, the interface circuitry is configured to exchange information (e.g. with other components) inside or outside the apparatus and the storage circuitry. Likewise, the device may comprise means configured to provide the functionality of the device.

The interface circuitry or means for communicating may correspond to one or more inputs and/or outputs for receiving and/or transmitting information, which may be in digital (bit) values according to a specified code, within a module, between modules or between modules of different entities. For example, the interface circuitry or means for communicating may comprise circuitry configured to receive and/or transmit information.

For example, the processing circuitry or means for processing may be implemented using one or more processing units, one or more processing devices, or any means for processing, such as a processor, a computer, or a programmable hardware component being operable with accordingly adapted software. In other words, the described function of the processing circuitry or means for processing may as well be implemented in software, which is then executed on one or more programmable hardware components. Such hardware components may comprise a general-purpose processor, a Digital Signal Processor (DSP), a micro-controller, etc.

For example, the storage circuitry or means for storing information may comprise at least one element of the group of a computer-readable storage medium, such as a magnetic or optical storage medium, e.g. a hard disk drive, a flash memory, Floppy-Disk, Random Access Memory (RAM), Read Only Memory (ROM), Programmable Read Only Memory (PROM), Erasable Programmable Read Only Memory (EPROM), an Electronically Erasable Programmable Read Only Memory (EEPROM), or a network storage.

In general, the functionality of the processing circuitry or means for processing may be implemented by the processing circuitry or means for processing executing machine-readable instructions (e.g. a program code). Accordingly, any feature ascribed to the processing circuitry or means for processing may be defined by one or more instructions of a plurality of machine-readable instructions. The apparatus or device may comprise the machine-readable instructions, e.g. within the storage circuitry or means for storing information.

Fig. 5 further shows the apparatus or device for configuring a plurality of microservices in a networked system. The apparatus comprises interface circuitry, memory circuitry, machine-readable instructions, and processor circuitry to execute the machine-readable instructions to monitor one or more metrics of the networked system, determine a topology of the networked system based on the one or more metrics, and configure the plurality of microservices based on the topology.

For example, the processor circuitry or means for processing may perform a method shown in the present disclosure, such as the method discussed in connection with Fig. 1.

The one or more metrics that are monitored may comprise at least a network traffic metric and a quality of service metric. Each microservice of the plurality of microservices may be configured to selectively operate as a plugin and a standalone service. Configuring the plurality of microservices may comprise executing two or more of the plurality of microservices as plugins. The plugins may communicate with each other via intra-process communication.

Each microservice of the plurality of microservices may implement a service interface callable by a service wrapper. Configuring the plurality of microservices may comprise loading a first microservice as a first plugin into the service wrapper when the first microservice is selectively operating as the plugin or calling the first microservice via a network request from the service wrapper when the first microservice is selectively operating as the standalone service.

The apparatus may comprise the machine-readable instructions to receive a request for the first microservice from a client apparatus and route the request to the service wrapper. Monitoring one or more metrics of the networked system may further comprise monitoring a plurality of shared hardware infrastructure resources. Determining the topology of the networked system may be based on a machine learning model trained on historical data of the networked system to predict a future state of the networked system.

The apparatus may further comprise machine-readable instructions to obtain one or more feedback metrics on the configuration of the plurality of microservices based on the topology and add the one or more feedback metrics as further historical data for retraining the machine learning model. Determining the topology may comprise determining or selecting a subset of the plurality of microservices to operate as plugins. Every microservice within the microservices package may be configured to operate together by way of a port or a socket.

A subset of the plurality of microservices operating as plugins may be stopped or paused when a network topology change requires them to operate as standalone services. Each microservice may be assigned a priority level and configured to modify its execution according to its priority level based on a system policy. Modifying a microservice's execution may comprise pausing the microservice or adjusting a quality metric. Each microservice of the plurality of microservices may be configured to process 5G payload data. A group of microservices of the plurality of microservices may be configured to form a microservices package.

The apparatus may further comprise machine-readable instructions to set a threshold for one or more metrics based on the determined topology and continuously monitor one or more metrics of the network system. A further topology of the networked system may be determined, and the plurality of microservices may be reconfigured based on the further topology when the threshold is met. Monitoring of one or more metrics may be done continuously, and determining the topology and configuring the plurality of microservices may be done based on continuous monitoring.

The apparatus may be configured to set AI guardrails or AI thresholds for specific AI applications, including hardware busses that are deemed to constrain performance, especially in terms of AI inference per unit of time. These AI guardrails or AI thresholds may be set either manually or automatically by way of AI that are created as a result of ongoing microservice network system monitoring and telemetry. For example, the Peripheral Component Interconnect Express (PCIe) bus may be deemed critical to transfer memory and AI results between the CPU and GPU memory. In this case, the PCIe bus may connect the CPU and GPU. The CPU may inform the GPU to allocate memory (e.g. with an alloc operation). Then, the CPU transfers data from the CPU System RAM to the GPU card RAM over the PCIe bus, which the GPU uses to perform AI inference. The GPU performs AI inference on the data transferred from the CPU system RAM that was copied into the GPU RAM. The GPU then transfers the AI Inference results back to the CPU System RAM. The CPU takes the results and performs some action (e.g. reports on Video AI Analytics object detection). The CPU then displays the results and or action.

In this example, the PCIe bus may be the performance bottleneck. Thus, the performance and capacity of the PCIe bus need to be monitored, especially when several microservices compete for limited PCIe resources on the same system, such as a Kubernetes system. Kubernetes is an open-source platform for automating the deployment, scaling, and management of containerized applications across clusters of machines. In this case, the service wrapper may decide to warn and/or redirect processing between the CPU and the GPU to reduce performance bottlenecks dynamically. Or it may report to the system administrator that the current hardware configuration is insufficient and recommend additional resource changes, including adding more GPU PCIe cards and/or reconfiguring the entire system. Also, as mentioned above, the result could be that, for particular scenarios, the microservice may block other microservices and execute them as standalone microservices if pre-recorded policies allow. In this case, a priority order of microservices instructs the system (e.g. Kubernetes) execution manager to pause some microservices.

Furthermore, especially for those deployments that support over-the-air or 5G radio access network (RAN) based microservices clusters, the network monitoring service wrappers may be applied to actual data and network traffic of ongoing payload networking. Payload networking is distinguished as the network traffic the onboarded microservices are generating, including the control and data traffic of 5G systems.

Based on network traffic and QoS, the apparatus may dynamically adapt between a microservices architecture, a monolithic architecture, and/or an intermediate hybrid model. To do this, services may be dynamically loaded as plugins within the same process when they need to interact closely. This reduces the network traffic between these services, as they can now communicate directly in-process. The system can still maintain a microservices architecture when services are independent and don't need to communicate frequently. Each microservice is refactored to also function as a plugin. This means it can be dynamically loaded into a host service, allowing it to run in the same process space and communicate directly with other plugins without network overhead.

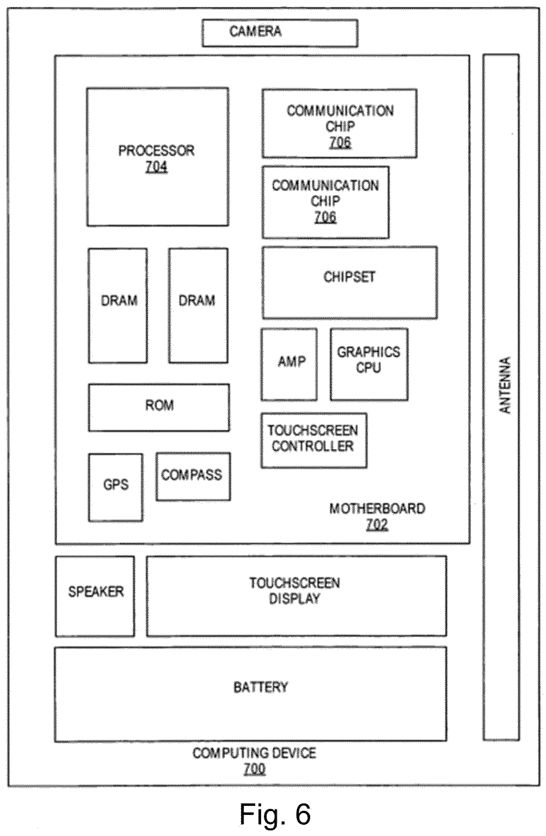

More details and optional aspects of Fig. 5 may be described in connection with examples described above (e.g. Figs. 1 to 4) or below (e.g. Fig. 6).

**Fig. 6** illustrates a computing device 700 in accordance with one implementation of the invention. The computing device 700 houses a board 702. The board 702 may include a number of components, including but not limited to a processor 704 and at least one communication chip 706. The processor 704 is physically and electrically coupled to the board 702. In some implementations the at least one communication chip 706 is also physically and electrically coupled to the board 702. In further implementations, the communication chip 706 is part of the processor 704.

Depending on its applications, computing device 700 may include other components that may or may not be physically and electrically coupled to the board 702. These other components include, but are not limited to, volatile memory (e.g. DRAM), non-volatile memory (such as, ROM), flash memory, a graphics processor, a digital signal processor, a crypto processor, a chipset, an antenna, a display, a touchscreen display, a touchscreen controller, a battery, an audio codec, a video codec, a power amplifier, a global positioning system (GPS) device, a compass, an accelerometer, a gyroscope, a speaker, a camera, and a mass storage device (such as, hard disk drive, compact disk (CD), digital versatile disk (DVD), and so forth).

The communication chip 706 enables wireless communications for the transfer of data to and from the computing device 700. The term "wireless" and its derivatives may be used to describe circuits, devices, systems, methods, techniques, communications channels, etc., that may communicate data through the use of modulated electromagnetic radiation through a non-solid medium. The term does not imply that the associated devices do not contain any wires, although in some embodiments they might not. The communication chip 706 may implement any of a number of wireless standards or protocols, including but not limited to Wi-Fi (IEEE 802.11 family), WiMAX (IEEE 802.16 family), IEEE 802.20, long term evolution (LTE), Ev-DO, HSPA+, HSDPA+, HSUPA+, EDGE, GSM, GPRS, CDMA, TDMA, DECT, Bluetooth, derivatives thereof, as well as any other wireless protocols that are designated as 3G, 4G, 5G, and beyond. The computing device 700 may include a plurality of communication chips 706. For instance, a first communication chip 706 may be dedicated to shorter range wireless communications such as Wi-Fi and Bluetooth and a second communication chip 706 may be dedicated to longer range wireless communications such as GPS, EDGE, GPRS, CDMA, WiMAX, LTE, Ev-DO, and others.

The processor 704 of the computing device 700 includes an integrated circuit die packaged within the processor 704. In some implementations of the invention, the integrated circuit die of the processor includes one or more devices that are assembled in an ePLB or eWLB based PoP package that includes a mold layer directly contacting a substrate, in accordance with implementations of the invention. The term "processor" may refer to any device or portion of a device that processes electronic data from registers and/or memory to transform that electronic data into other electronic data that may be stored in registers and/or memory.

The communication chip 706 also includes an integrated circuit die packaged within the communication chip 706. In accordance with another implementation of the invention, the integrated circuit die of the communication chip includes one or more devices that are assembled in an ePLB or eWLB based PoP package that that includes a mold layer directly contacting a substrate, in accordance with implementations of the invention.

More details and optional aspects of Fig. 6 may be described in connection with examples described above (e.g. Figs. 1 to 5) or below.

The concept for configuring a plurality of microservices in a networked system may comprise one or more additional optional features corresponding to one or more aspects of the proposed concept or one or more examples described above or below.

It is further understood that the disclosure of several steps, processes, operations, or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process, or operation may include and/or be broken up into several sub-steps, -functions, -processes, or -operations.

If some aspects have been described in relation to a device or system, these aspects should also be understood as a description of the corresponding method. For example, a block, device, or functional aspect of the device or system may correspond to a feature, such as a method step, of the corresponding method. Accordingly, aspects described in relation to a method shall also be understood as a description of a corresponding block, a corresponding element, a property, or a functional feature of a corresponding device or a corresponding system.

An example (e.g. example 1) relates to a method for configuring of microservices in a networked system, the method comprising: monitoring one or more metrics of the networked system; determining a topology of the networked system based on the one or more metrics; and configuring of the plurality of microservices based on the topology.

Another example (e.g. example 2) relates to a previously described example (e.g. example 1), wherein the one or more metrics comprise at least one of: a network traffic metric; and a quality of service metric.

Another example (e.g. example 3) relates to a previously described example (e.g. any one of examples 1 or 2), wherein each microservice of the plurality of microservices is configured to selectively operate as: a plugin; and a standalone service.

Another example (e.g. example 4) relates to a previously described example (e.g. example 3), wherein configuring the plurality of microservices comprises executing two or more of the plurality of microservices as plugins.

Another example (e.g. example 5) relates to a previously described example (e.g. example 4), wherein the plugins communicate with each other via intra-process communication.

Another example (e.g. example 6) relates to a previously described example (e.g. any one of examples 3 to 5), wherein each microservice of the plurality of microservices implements a service interface callable by a service wrapper, wherein configuring the plurality of microservices comprises at least one of: loading a first microservice as a first plugin into the service wrapper when the first microservice is selectively operating as the plugin; or calling the first microservice via a network request from the service wrapper when the first microservice is selectively operating as the standalone service.

Another example (e.g. example 7) relates to a previously described example (e.g. example 6), wherein the method further comprises: receiving a request for the first microservice from a client apparatus; and routing the request to the service wrapper.

Another example (e.g. example 8) relates to a previously described example (e.g. any one of examples 1 to 7), wherein monitoring the one or more metrics of the networked system further comprises monitoring a plurality of shared hardware infrastructure resources.

Another example (e.g. example 9) relates to a previously described example (e.g. any one of examples 1 to 8), wherein determining the topology of the networked system is based on a machine learning model trained on historical data of the networked system to predict a future state of the networked system.

Another example (e.g. example 10) relates to a previously described example (e.g. example 9), wherein the method further comprises: obtaining one or more feedback metrics on the configuration of the plurality of microservices based on the topology; and adding the one or more feedback metrics as further historical data for retraining the machine learning model.

Another example (e.g. example 11) relates to a previously described example (e.g. any one of examples 3 to 10), wherein determining the topology comprises determining a subset of the plurality of microservices to operate as plugins.

Another example (e.g. example 12) relates to a previously described example (e.g. example 11), wherein the subset of the plurality of microservices determined to operate as plugins are stopped or paused when they are operating as standalone services.

Another example (e.g. example 13) relates to a previously described example (e.g. any one of examples 1 to 12), wherein a group of microservices of the plurality of microservices can be configured to form a microservices package, wherein every microservice within the microservices package is configured to operate together by way of a port or a socket.

Another example (e.g. example 14) relates to a previously described example (e.g. any one of examples 1 to 13), wherein each microservice is assigned a priority level and is configured to modify its execution according to its priority level based on a system policy.

Another example (e.g. example 15) relates to a previously described example (e.g. example 14), wherein modifying its execution comprises pausing the microservice or adjusting a quality metric.

Another example (e.g. example 16) relates to a previously described example (e.g. any one of examples 1 to 14), wherein each microservice of the plurality of microservices is configured to process 5G payload data.

Another example (e.g. example 17) relates to a previously described example (e.g. any one of examples 1 to 16), wherein the method further comprises setting a threshold for the one or more metrics based on the determined topology; and continuously monitoring the one or more metrics of the network system, wherein a further topology of the networked system is determined and the plurality of microservices are reconfigured based on the further topology when the threshold is met.

Another example (e.g. example 18) relates to a previously described example (e.g. any one of examples 1 to 17), wherein the monitoring of the one or more metrics is done continuously and determining the topology and configuring the plurality of microservices is done based on the continuous monitoring.

An example (e.g. example 19) relates to a non-transitory, computer-readable medium comprising a program code that, when the program code is executed on a processor, a computer, or a programmable hardware component, causes the processor, computer, or programmable hardware component to perform any one of the methods a previously described example (e.g. any one of examples 1 to 18).

An example (e.g. example 20) relates to an apparatus for configuring a plurality of microservices in a networked system, the apparatus comprising interface circuitry, memory circuitry, machine-readable instructions, and processor circuitry to execute the machine-readable instructions to: monitor one or more metrics of the networked system; determine a topology of the networked system based on the one or more metrics; and configure the plurality of microservices based on the topology.

Another example (e.g. example 21) relates to a previously described example (e.g. example 20), wherein the one or more metrics comprise at least one of: a network traffic metric; and a quality of service metric.

Another example (e.g. example 22) relates to a previously described example (e.g. any one of examples 20 or 21), wherein each microservice of the plurality of microservices is configured to selectively operate as: a plugin; and a standalone service.

Another example (e.g. example 23) relates to a previously described example (e.g. example 22), wherein configuring the plurality of microservices comprises executing two or more of the plurality of microservices as plugins.

Another example (e.g. example 24) relates to a previously described example (e.g. example 23), wherein the plugins communicate with each other via intra-process communication.

Another example (e.g. example 25) relates to a previously described example (e.g. any one of examples 22 to 24), wherein each microservice of the plurality of microservices implements a service interface callable by a service wrapper, wherein configuring the plurality of microservices comprises at least one of: loading a first microservice as a first plugin into the service wrapper when the first microservice is selectively operating as the plugin; or calling the first microservice via a network request from the service wrapper when the first microservice is selectively operating as the standalone service.

Another example (e.g. example 26) relates to a previously described example (e.g. example 25), wherein the apparatus further comprises the machine-readable instructions to: receive a request for the first microservice from a client apparatus; and route the request to the service wrapper.

Another example (e.g. example 27) relates to a previously described example (e.g. any one of examples 20 to 26), wherein monitoring the one or more metrics of the networked system further comprises monitoring a plurality of shared hardware infrastructure resources.

Another example (e.g. example 28) relates to a previously described example (e.g. any one of examples 20 to 27), wherein determining the topology of the networked system is based on a machine learning model trained on historical data of the networked system to predict a future state of the networked system.

Another example (e.g. example 29) relates to a previously described example (e.g. example 28), wherein the apparatus further comprises the machine-readable instructions to: obtain one or more feedback metrics on the configuration of the plurality of microservices based on the topology; and add the one or more feedback metrics as further historical data for retraining the machine learning model.

Another example (e.g. example 30) relates to a previously described example (e.g. any one of examples 22 to 29), wherein determining the topology comprises determining a subset of the plurality of microservices to operate as plugins.

Another example (e.g. example 31) relates to a previously described example (e.g. example 30), wherein the subset of the plurality of microservices determined to operate as plugins are stopped or paused when they are operating as standalone services.

Another example (e.g. example 32) relates to a previously described example (e.g. any one of examples 20 to 31), wherein a group of microservices of the plurality of microservices can be configured to form a microservices package, wherein every microservice within the microservices package is configured to operate together by way of a port or a socket.

Another example (e.g. example 33) relates to a previously described example (e.g. any one of examples 20 to 32), wherein each microservice is assigned a priority level and is configured to modify its execution according to its priority level based on a system policy.

Another example (e.g. example 34) relates to a previously described example (e.g. example 33), wherein modifying its execution comprises pausing the microservice or adjusting a quality metric.

Another example (e.g. example 35) relates to a previously described example (e.g. any one of examples 20 to 34), wherein each microservice of the plurality of microservices is configured to process 5G payload data.

Another example (e.g. example 36) relates to a previously described example (e.g. any one of examples 20 to 2835 wherein the apparatus further comprises the machine-readable instructions to: set a threshold for the one or more metrics based on the determined topology: and continuously monitor the one or more metrics of the network system, wherein a further topology of the networked system is determined and the plurality of microservices are reconfigured based on the further topology when the threshold is met.

Another example (e.g. example 37) relates to a previously described example (e.g. any one of examples 20 to 36), wherein the monitoring of the one or more metrics is done continuously and determining the topology and configuring the plurality of microservices is done based on the continuous monitoring.

The aspects and features described in relation to a particular one of the previous examples may also be combined with one or more of the further examples to replace an identical or similar feature of that further example or to additionally introduce the features into the further example.

Examples may further be or relate to a (computer) program, including a program code to execute one or more of the above methods when the program is executed on a computer, processor, or other programmable hardware component. Thus, steps, operations, or processes of different methods described above may also be executed by programmed computers, processors, or other programmable hardware components. Examples may also cover program storage devices, such as digital data storage media, which are machine-, processor- or computer-readable and encode and/or contain machine-executable, processor-executable, or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations, or functions disclosed in the description or claims shall not be construed to imply that these operations are necessarily dependent on the order described unless explicitly stated in the individual case or necessary for technical reasons. Therefore, the previous description does not limit the execution of several steps or functions to a certain order. Furthermore, in further examples, a single step, function, process, or operation may include and/or be broken up into several sub-steps, -functions, -processes, or -operations.

If some aspects have been described in relation to a device or system, these aspects should also be understood as a description of the corresponding method. For example, a block, device, or functional aspect of the device or system may correspond to a feature, such as a method step, of the corresponding method. Accordingly, aspects described in relation to a method shall also be understood as a description of a corresponding block, a corresponding element, a property, or a functional feature of a corresponding device or a corresponding system.

As used herein, the term "module" refers to logic that may be implemented in a hardware component or device, software or firmware running on a processing unit, or a combination thereof, to perform one or more operations consistent with the present disclosure. Software and firmware may be embodied as instructions and/or data stored on non-transitory computer-readable storage media. As used herein, the term "circuitry" can comprise, singly or in any combination, non-programmable (hardwired) circuitry, programmable circuitry such as processing units, state machine circuitry, and/or firmware that stores instructions executable by programmable circuitry. Modules described herein may, collectively or individually, be embodied as circuitry that forms a part of a computing system. Thus, any of the modules can be implemented as circuitry. A computing system referred to as being programmed to perform a method can be programmed to perform the method via software, hardware, firmware, or combinations thereof.

Any of the disclosed methods (or a portion thereof) can be implemented as computer-executable instructions or a computer program product (e.g. machine-readable instructions, program code, etc.). Such instructions can cause a computing system or one or more processing units capable of executing computer-executable instructions to perform any of the disclosed methods. As used herein, the term "computer" refers to any computing system or device described or mentioned herein. Thus, the term "computer-executable instruction" refers to instructions that can be executed by any computing system or device described or mentioned herein.

The computer-executable instructions can be part of, for example, an operating system of the computing system, an application stored locally to the computing system, or a remote application accessible to the computing system (e.g. via a web browser). Any of the methods described herein can be performed by computer-executable instructions performed by a single computing system or by one or more networked computing systems operating in a network environment. Computer-executable instructions and updates to the computer-executable instructions can be downloaded to a computing system from a remote server.

Further, it is to be understood that implementation of the disclosed technologies is not limited to any specific computer language or program. For instance, the disclosed technologies can be implemented by software written in C++, C#, Java, Perl, Python, JavaScript, Adobe Flash, C#, assembly language, or any other programming language. Likewise, the disclosed technologies are not limited to any particular computer system or type of hardware.

Furthermore, any of the software-based examples (comprising, for example, computer-executable instructions for causing a computer to perform any of the disclosed methods) can be uploaded, downloaded, or remotely accessed through a suitable communication means. Such suitable communication means include, for example, the Internet, the World Wide Web, an intranet, cable (including fiber optic cable), magnetic communications, electromagnetic communications (including RF, microwave, ultrasonic, and infrared communications), electronic communications, or other such communication means.

The disclosed methods, apparatuses, and systems are not to be construed as limiting in any way. Instead, the present disclosure is directed toward all novel and nonobvious features and aspects of the various disclosed examples, alone and in various combinations and subcombinations with one another. The disclosed methods, apparatuses, and systems are not limited to any specific aspect, feature, or combination thereof, nor do the disclosed examples require that any one or more specific advantages be present, or problems be solved.

Theories of operation, scientific principles, or other theoretical descriptions presented herein in reference to the apparatuses or methods of this disclosure have been provided for the purposes of better understanding and are not intended to be limiting in scope. The apparatuses and methods in the appended claims are not limited to those apparatuses and methods that function in the manner described by such theories of operation.

The following claims are hereby incorporated in the detailed description, wherein each claim may stand on its own as a separate example. It should also be noted that although, in the claims, a dependent claim refers to a particular combination with one or more other claims, other examples may also include a combination of the dependent claim with the subject matter of any other dependent or independent claim. Such combinations are hereby explicitly proposed unless it is stated in the individual case that a particular combination is not intended. Furthermore, features of a claim should also be included for any other independent claim, even if that claim is not directly defined as dependent on that other independent claim.

## Claims

1. A method performed by a computer for configuring of microservices in a networked system, the method comprising:
monitoring one or more metrics of the networked system;
determining a topology of the networked system based on the one or more metrics; and
configuring of the plurality of microservices based on the topology.

2. The method of claim 1, wherein the one or more metrics comprise at least one of: a network traffic metric; and a quality of service metric.

3. The method of any of the preceding claims, wherein each microservice of the plurality of microservices is configured to selectively operate as: a plugin; and a standalone service.

4. The method of claim 3, wherein configuring the plurality of microservices comprises executing two or more of the plurality of microservices as plugins.

5. The method of claim 4, wherein the plugins communicate with each other via intra-process communication.

6. The method of one of the claims 3 to 5, wherein each microservice of the plurality of microservices implements a service interface callable by a service wrapper, wherein configuring the plurality of microservices comprises at least one of: loading a first microservice as a first plugin into the service wrapper when the first microservice is selectively operating as the plugin; or calling the first microservice via a network request from the service wrapper when the first microservice is selectively operating as the standalone service.

7. The method of claim 6, wherein the method further comprises: receiving a request for the first microservice from a client apparatus; and routing the request to the service wrapper.

8. The method of any one of claims 3 to 10, wherein determining the topology comprises determining a subset of the plurality of microservices to operate as plugins.

9. The method of any one of the preceding claims, wherein a group of microservices of the plurality of microservices can be configured to form a microservices package, wherein every microservice within the microservices package is configured to operate together by way of a port or a socket.

10. The method of any one of the preceding claims, wherein each microservice is assigned a priority level and is configured to modify its execution according to its priority level based on a system policy.

11. The method of any one of the preceding claims, wherein the method further comprises setting a threshold for the one or more metrics based on the determined topology; and continuously monitoring the one or more metrics of the network system, wherein a further topology of the networked system is determined and the plurality of microservices are reconfigured based on the further topology when the threshold is met.

12. The method of any one of the preceding claims, wherein the monitoring of the one or more metrics is done continuously and determining the topology and configuring the plurality of microservices is done based on the continuous monitoring.

13. An apparatus comprising means to perform a method as claimed in any one of the preceding claims.

14. A machine-readable storage including machine-readable instructions, when executed, cause the computer to implement a method as claimed in one of the claims 1 to 12.

15. A computer program comprising instructions which, when the program is executed by a computer, cause the computer to carry out the method as claimed in one of the claims 1 to 12.
